# EUROPÄISCHE PATENTANMELDUNG

(11) **EP 4 796 318 A1**
(43) Veröffentlichungstag der Anmeldung: **26.08.2026**
(21) Anmeldenummer: 25159635.9
(22) Anmeldetag: 24.02.2025
(51) Int. Cl.: B32B 17/10, B29B 17/00

(54) **NACHHALTIGE VERBUNDSCHEIBE MIT INTEGRIERTEM FUNKTIONSELEMENT MIT RAHMENFOLIE UND VERFAHREN ZU DEREN HERSTELLUNG**

(71) Anmelder: Saint-Gobain Sekurit France, 60150 Thourotte (FR)
(72) Erfinder: GIER, Stephan, 52134 Herzogenrath (DE); BORCHMANN, Nikolai, 52134 Herzogenrath (DE); LATZ, Franz-Josef, 52134 Herzogenrath (DE); KLEIN, Marcel, 52134 Herzogenrath (DE)
(74) Vertreter: SGR Germany-Patents

(57) **Zusammenfassung**

Die Erfindung betrifft eine nachhaltig gefertigte Verbundscheibe (1) mit integriertem Funktionselement (2), umfassend eine erste Scheibe (3) und eine zweite Scheibe (4) und einer dazwischen angeordneten thermoplastischen Zwischenschicht (5), wobei das Funktionselement (2) in einer Aussparung in mindestens einer thermoplastischen Rahmenfolie (6) zwischen der ersten Scheibe (3) und der zweiten Scheibe (4) angeordnet ist, dadurch gekennzeichnet, dass die thermoplastische Rahmenfolie (6) aus einer materialeinheitlich recycelten Alt-Akustik-PVB-Folie ausgebildet ist. Die Erfindung betrifft außerdem ein Verfahren zur Herstellung einer solchen Verbundscheibe (1).

## Beschreibung

Die Erfindung betrifft eine nachhaltig gefertigte Verbundscheibe mit integrierten Funktionselement mit einer dieses umgebenden Rahmenfolie aus materialeinheitlich recycelter Alt-Akustik-PVB-Folie und ein verbessertes, nachhaltigeres Verfahren zur Herstellung einer solchen nachhaltigen Verbundscheibe.

Es sind Verglasungen, insbesondere Verbundscheiben mit Funktionselementen, bekannt, deren optische Eigenschaften veränderlich sind. Die Funktionselemente sind dabei häufig elektrisch schalt- oder regelbar. Die optischen Eigenschaften der Funktionselemente können dabei durch eine angelegte Spannung verändert werden. Ein Beispiel sind SPD-Funktionselemente (suspended particle device), die beispielsweise aus EP 0876608 B1 und WO 2011033313 A1 bekannt sind. Durch die angelegte Spannung lässt sich die Transmission von sichtbarem Licht steuern. Verglasungen mit solchen Funktionselementen können also auf komfortable Weise elektrisch abgedunkelt werden.

Die Funktionselemente werden häufig als vorgefertigte, teilweise folienartige und/oder mehrschichtige Funktionselemente bereitgestellt, die sich einfach in Verbundgläser integrieren lassen. Dazu werden die Funktionselemente in einer thermoplastischen Zwischenschicht eingebettet und zwischen zwei Glasscheiben laminiert. Typischerweise wird die thermoplastische Zwischenschicht aus mehreren Folien hergestellt, von denen mindestens eine mit einer Aussparung versehen ist, in welche das Funktionselement im Wesentlichen passgenau eingesetzt wird. Solche Herstellungsverfahren sind beispielsweise aus WO2007122429A1, WO2007122426A1 oder WO2014083111A1 bekannt. Eine solche thermoplastische Folie mit einer Aussparung wird im Folgenden auch Rahmenfolie genannt. Die Rahmenfolie dient zum einen dazu, die Höhe (Dicke) des Funktionselements innerhalb der Verbundscheibe zu kompensieren und dazu, die Lagen der Verbundscheibe fest miteinander zu verbinden, da das Funktionselement, beispielsweise eine schaltbare PDLC-Folie, nicht bis zu den Kanten geführt werden kann, da dies beispielsweise zu einer Delamination führen würde. Die Rahmenfolien dienen auch dem Schutz der Funktionselemente vor äußeren Einflüssen, fungieren also gleichsam auch als Randversiegelung nach außen.

Bei den Rahmenfolien für integrierte Funktionselemente werden insbesondere bei Verbundscheiben im Automobilbereich derzeit neu gefertigte Standard-PVB-Folien eingesetzt. Bei der Herstellung der Rahmenfolien werden flächige Mittelstücke, abgestimmt auf die Größe und Ausdehnung des Funktionselements, als Aussparung herausgestanzt oder -geschnitten. Nicht selten werden also 80 % oder mehr dieser neu gefertigten Standardfolien durch Einbringen der notwendigen Aussparung für das Funktionselement als Abfall verworfen, was im Hinblick auf eine nachhaltige Fertigung und den entstehenden CO₂-Fußabdruck nachteilig ist. Die Nachfrage nach Verbundscheiben mit integrierten Funktionselementen ist darüber hinaus rapide steigend, so dass ein entsprechend steigender Bedarf an Rahmenfolien besteht.

Die CO₂-Reduzierung mittels einer nachhaltigen, ressourcenschonenden und umweltgerechten Fertigung ist ein zunehmend wichtiger Punkt auf der globalen Agenda zur Fahrzeugentwicklung.

Auch die Umstellung auf Elektrofahrzeuge nimmt aus diesem Grund rasch zu. Infolgedessen werden Lärmquellen, die zuvor vom Motorgeräusch verdeckt waren, erkennbar, und es sind Fahrzeugscheiben erforderlich, um eine noch bessere Schalldämmung zu erreichen. Ein zunehmender Teil der thermoplastischen Zwischenschichten in Verbundgläsern, insbesondere für Fahrzeuge, wird daher als Akustik-PVB gefertigt. Hierbei handelt es sich üblicherweise um einen dreischichtigen, sandwichartig aufgebauten Folienverbund, der typischerweise aus drei Polyvinylbutyral (PVB)-Folien aufgebaut ist, der durch Co-Extrusion hergestellt wird. Die äußeren Deckschichten (auch Außenschicht oder Skin-layer genannt) sind steifer ausgebildet, weisen einen höheren Anteil an Hydroxygruppen (auch -OH-Gruppen, Resthydroxylgehalt, OH-Anteil genannt) auf als die Kernschicht (auch Core layer genannt), die einen höheren Anteil nicht-polarer Weichmacher, beispielsweise Triethylenglykol-di(2-ethyl)-hexanoat, enthalten, um diese zur Dämpfung der Schallwellen (akustische Dämpfung) weicher auszubilden (siehe beispielsweise US-Patente 5 340 654, 5 190 826 und 7 510 771).

Aufgrund der unterschiedlichen PVB-Materialzusammensetzung der beiden Deckschichten und der Kernschicht können Akustik-PVB-Folien nicht einfach re-extrudiert und wieder als neue, einheitliche PVB-Folie zur Verwendung in thermoplastischen Zwischenschichten von Verbundscheiben, insbesondere nicht in einem Durchsichtbereich, oder gar einem zentralen Sichtfeld, beispielsweise in einer Windschutzscheibe, eingesetzt werden, da die Materialien der Deck- und Kernschichten aufgrund der unterschiedlichen physikochemischen Eigenschaften auch in der Schmelzphase nur sehr schlecht oder nicht miteinander mischbar sind, ohne eine signifikant erhöhte Trübung zur erzeugen. Durch die Co-Extrusion sind die drei Schichten der Akustik-PVB darüber hinaus so fest miteinander verbunden, dass die Auftrennung in die Einzelschichten, insbesondere ohne gegenseitige Kontamination der verschiedenen Deck- und Kernschicht-Materialien, sehr schwierig ist. Derzeit kommt für recycelte Akustik-PVB-Folien, neben der kostspieligen Entsorgung des Materials als Abfall, nur eine minderwertige Weiterverwendung (Downcycling), beispielsweise als Füllmaterial oder als Bindematerial in Teppichen, infrage. Eine Verwendung wiederum in Verbundscheiben ist derzeit nicht möglich.

Erste Prozesse, die sich mit der Auftrennung von Akustik-PVB Folien in die verschiedenen Materialien des Mehrschichtaufbaus beschäftigen, sind in der WO 2022/150528 A1, der WO 2022/250944 A2 und der WO 2024/73285 A2 beschrieben. In der WO 2022/150528 A1 und der WO 2024/006630A1 werden Verfahren beschrieben, in denen einem Granulat aus einem Folienverbund mit steiferem und weicheren PVB-Lagen, wie in üblichen Akustik-PVB-Folien, ein zusätzlicher Weichmacher zugesetzt wird und dann in mechanisch-physikalischen Schritten, wie Dekantieren, Filtrieren oder Zentrifugieren das steifere PVB-Material der Deckschichten angereichert und von dem weicheren PVB-Material der Kernschicht und dem zusätzlichen Weichmacher abgetrennt wird. Die Trennung ist jedoch weiterhin nur unvollständig. In der WO 2022/250944 A2 und der WO 2024/073285 A2 werden dagegen die verschiedenen Schichten der Mehrschichtfolie lagenweise voneinander abgetrennt, was jedoch mit Materialverlust einhergeht. Es ist zwar somit jeweils möglich, wenigstens einen Teil der Akustik-PVB zu recyclen, jedoch sind die bisher beschriebenen Prozesse alle sehr aufwendig und kompliziert und eine Kontamination der Folien-Materialien untereinander kann auch nicht vollständig ausgeschlossen werden.

Aufgabe der vorliegenden Erfindung ist es, eine Verbundscheibe mit einem integrierten Funktionselement, sowie ein Verfahren zu deren Herstellung bereitzustellen, mit der eine verbesserte Nachhaltigkeit und eine verbesserte Kreislaufwirtschaft innerhalb der Produktgruppe der Verbundscheiben erzielt werden kann.

Die Aufgabe der vorliegenden Erfindung wird erfindungsgemäß durch eine Verbundscheibe gemäß dem unabhängigen Anspruch 1, sowie durch ein Verfahren zur Herstellung einer Verbundscheibe gemäß Anspruch 8 gelöst. Bevorzugte Ausführungen der Erfindung gehen aus den Unteransprüchen hervor.

Die Erfindung betrifft eine Verbundscheibe mit integriertem Funktionselement, umfassend eine erste Scheibe und eine zweite Scheibe und eine dazwischen angeordnete thermoplastische Zwischenschicht, wobei das Funktionselement in einer Aussparung in mindestens einer thermoplastischen Rahmenfolie zwischen der ersten Scheibe und der zweiten Scheibe angeordnet ist, und die thermoplastische Rahmenfolie aus einer materialeinheitlich recycelten Alt-Akustik-PVB-Folie ausgebildet ist.

Gemäß einer Ausführungsform ist die thermoplastische Rahmenfolie aus einer aus Alt-Verbundscheiben materialeinheitlich recycelten Alt-Akustik-PVB-Folie ausgebildet.

Im Sinne der Erfindung wird mit "Alt-Verbundscheibe" eine Verbundscheibe bezeichnet, die bereits für ihren zweckmäßigen Gebrauch verwendet wurde oder die im Zuge ihrer Fertigung Mängel aufwies, die nicht zu dem zweckmäßigen Gebrauch führten. Mit einer "Alt-Akustik-PVB-Folie" wird eine solche Akustik-PVB-Folie bezeichnet, die in der vorgenannten Alt-Verbundscheibe verwendet wurde oder die als Randteil einer Akustik-PVB-Folie bei der Herstellung einer Verbundscheibe am Rand der entsprechenden Verbundscheibe abgeschnitten wird (sogenannte "trims").

Die Nachhaltigkeit und die Kreislaufwirtschaft in der Verbundscheibenherstellung mit integrierten Funktionselementen, kann durch die Erfindung erheblich gesteigert und verbessert werden. Die Nachfrage nach Verbundscheiben mit integrierten Funktionselementen, sowie auch die Verwendung von Akustik-PVB-Mehrschichtfolien in Verbundscheiben ist, wie bereits geschildert, jeweils deutlich ansteigend. Somit kann durch die Erfindung der Anteil von ansonsten nur einem Downcycling zugänglicher oder gar zu entsorgender Alt-Akustik-PVB- Folie und die damit zusammenhängenden Verluste und Kosten drastisch reduziert werden. Zum anderen beträgt der CO₂-Fußabdruck einer recycelten Rahmenfolie nur 10% gegenüber dem einer neu hergestellten PVB-Folie, von der dann durch die Ausbildung der Aussparung für ein Funktionselement auch noch große Teile üblicherweise verworfen werden müssten. Insgesamt kann die Herstellung von erfindungsgemäßen Verbundscheiben mit integrierten Funktionselementen durch die verbesserte, ressourcenschonende Kreislaufführung der thermoplastischen Folien für die Zwischenschicht mit dem integrierten Funktionselement innerhalb der Produktgruppe der Verbundscheiben besonders kosteneffizient und nachhaltig erfolgen.

Unter dem Begriff "materialeinheitlich recycelt" wird im Sinne der Erfindung verstanden, dass das Material der Alt-Akustik-PVB-Folie vollständig, das heißt ohne Auftrennung in die einzelnen Materialschichten oder teilweiser Abtrennung der verschiedenen Schichtmaterialien voneinander, also beispielsweise ohne die aufwändige Abtrennung von weicherem PVB-Material der Kernschicht und der Anreicherung des steiferen Deckschichtmaterials mittels chemisch-physikalischer Trennverfahren, wie sie im Stand der Technik beschrieben sind, in die Herstellung der neuen re-extrudierten thermoplastischen Rahmenfolie eingesetzt wird. Bevorzugt wird die Alt-Akustik-PVB-Folie mechanisch zu einem Granulat zerkleinert, das dann zur weiteren Verarbeitung zur thermoplastischen Rahmenfolie in der üblichen Art und Weise aufgeschmolzen und re-extrudiert wird.

Das Funktionselement ist insbesondere ein Funktionselement mit veränderlichen optischen Eigenschaften. Die Veränderung der optischen Eigenschaften kann dabei passiv ohne Einflussnahme durch einen Benutzer erfolgen, wie beispielsweise im Falle eines photochromen Funktionselements oder eines Polfilters, oder aktiv, beispielsweise durch Schaltung durch einen Benutzer veränderbar sein, beispielsweise durch Änderung der an das Funktionselement angelegten elektrischen Spannung. Bevorzugt ist das in die erfindungsgemäße Verbundscheibe integrierte Funktionselement ein Funktionselement mit elektrisch schaltbaren, steuerbaren optischen Eigenschaften.

Das Funktionselement mit elektrisch schaltbaren, steuerbaren optischen Eigenschaften umfasst beispielsweise eine aktive Schicht zwischen zwei Flächenelektroden. Die aktive Schicht weist die steuerbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen der ersten Scheibe und der zweiten Scheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter, wie sogenannte FPC-Anschlüsse realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind. Die aktiven Schichten werden durch das Einsetzen in die Aussparung in der thermoplastischen Rahmenfolie von dieser umgeben und geschützt.

Unter der Aussparung wird im Sinne der Erfindung eine durchgehende Ausnehmung in der thermoplastischen Rahmenfolie verstanden, gleichsam ein ausgedehntes Loch oder eine Durchführung. Die Aussparung wird häufig auch als Cut-Out bezeichnet, weil sie typischerweise durch Ausschneiden oder Ausstanzen eines flächigen Bereichs der thermoplastischen Rahmenfolie hergestellt wird.

In einer bevorzugten Ausgestaltung ist die thermoplastische Rahmenfolie aus materialeinheitlich recycelter Alt-Akustik-PVB-Folie eine PVB-Folie, deren Hydroxygruppen-Anteil (hierin auch OH-Gruppen-Anteil, Rest-Hydroxygruppengehalt, OH-Anteil genannt) in Gewichtsprozent zwischen 14,5 % und 19,5%, bevorzugt zwischen 16,5% und 17,5%, beträgt.

In einer anderen bevorzugten Ausgestaltung ist die thermoplastische Rahmenfolie eine PVB-Folie, deren Weichmachergehalt in Gewichtsprozent zwischen 28% und 32% beträgt. Weichmacher sind chemische Verbindungen, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Geeignete Weichmacher für PVB-Folien sind bekannt, beispielsweise Carbonsäureester, insbesondere schwerflüchtige Carbonsäureester, Fette, Öle, Weichharze und Campher. Bevorzugt werden aliphatische Diester des Tri- bzw. Tetraethylenglykols eingesetzt. Besonders bevorzugt werden als Weichmacher 3G7, 3G8 oder 4G7 eingesetzt, wobei die erste Ziffer die Anzahl der Ethylenglykoleinheiten und die letzte Ziffer die Anzahl der Kohlenstoffatome im Carbonsäureteil der Verbindung bezeichnet. So steht 3G8 für Triethylenglykol-bis-(2-ethylhexanoat).

Die thermoplastische Rahmenfolie kann direkt mit der ersten und/oder zweiten Scheibe in Kontakt stehen. In einer bevorzugten Ausgestaltung ist die thermoplastische Rahmenfolie mit dem in die Aussparung eingesetzten Funktionselement über jeweils eine weitere thermoplastische Folie mit jeder Scheibe verbunden. Zwischen der thermoplastischen Rahmenfolie und der ersten Scheibe ist dann, üblicherweise ganzflächig, mindestens eine erste thermoplastische Verbindungsfolie und zwischen der thermoplastischen Rahmenfolie und der zweiten Scheibe mindestens eine zweite thermoplastische Verbindungsfolie angeordnet. Die erste thermoplastische Verbindungsfolie und die zweite thermoplastische Verbindungsfolie sind gemäß dieser Ausführungsform in der resultierenden Verbundscheibe Teil der thermoplastischen Zwischenschicht. Dies bedeutet, die thermoplastische Zwischenschicht der erfindungsgemäßen Verbundscheibe gemäß dieser Ausführungsform umfasst die erste thermoplastische Verbindungsfolie und die zweite thermoplastische Verbindungsfolie. Die Verbindungsfolien weisen dabei bevorzugt keine Aussparungen auf und bedecken die gesamte thermoplastische Rahmenfolie samt ihrer Aussparung, bzw. dem darin eingesetzten Funktionselement. In dieser weiteren Ausgestaltung der Verbundscheibe ist also zwischen der ersten Scheibe und der thermoplastischen Rahmenfolie und dem integrierten Funktionselement eine erste thermoplastische Verbindungsfolie und/oder zwischen der zweiten Scheibe und der thermoplastischen Rahmenfolie und dem integrierten Funktionselement eine zweite thermoplastische Verbindungsfolie angeordnet, wobei die erste und/oder die zweite thermoplastische Verbindungsfolie bevorzugt eine PVB Folie ist.

Die erste und zweite thermoplastische Verbindungsfolie, auch kurz Verbindungsfolie oder Verbundfolie genannt, enthalten bevorzugt Polyvinylbutyral (PVB), Ethylenvinylacetat (EVA), Polyurethan (PU), Cycloolefinpolymere (COP) und/oder Copolymere oder Gemische davon, besonders bevorzugt PVB. Diese Materialien sind für den Einsatz in der thermoplastische Zwischenschicht von Verbundscheiben üblich und bekannt.

Die erste und/oder die zweite thermoplastische Verbindungsfolie können jeweils von einer oder mehreren polymeren Folien gebildet werden. Die thermoplastischen Verbindungsfolien können jeweils auch mehrere polymere Schichten (Lagen) mit unterschiedlichen oder gleichen Eigenschaften umfassen. Die Verbundscheibe kann eine erste thermoplastische Verbindungsfolie und eine zweite thermoplastische Verbindungsfolie oder auch mehrere erste und/oder zweite thermoplastische Verbindungsfolien enthalten. Anstelle einer ersten und/oder zweiten thermoplastischen Verbindungsfolie kann sich demnach auch ein jeweils zweilagiger, dreilagiger oder mehrlagiger Folienstapel aus thermoplastischen Verbindungsfolien und/oder weiteren funktionellen Folien befinden, wobei die einzelnen Folien gleiche oder unterschiedliche Eigenschaften aufweisen können. Eine oder beide Verbindungsfolien können zum Beispiel akustische Dreischicht-PVB-Folien (Akustik-PVB-Folie) mit dem bereits beschriebenen Sandwichaufbau sein. Eine thermoplastische Verbindungsfolie kann im Herstellprozess auch aus Abschnitten, ggf. unterschiedlicher, thermoplastischer Folien ausgebildet werden, deren Seitenkanten aneinandergrenzen.

Grundsätzlich ist es auch möglich, dass die thermoplastische Rahmenfolie mit dem darin eingesetzten Funktionselement und thermoplastische Verbindungsfolie(n) in flächigen Abschnitten der Verbundscheibe nebeneinander angeordnet sein können, wobei dann deren Seitenkanten aneinander grenzen. In diesem Fall bildet die thermoplastische Rahmenfolie nicht den umlaufenden äußeren seitlichen Rand der Verbundscheibe ab, sondern ist zum Beispiel nur in einem in Einbaulage oberen Bereich der Verbundscheibe angeordnet. Dies kann beispielsweise in einem Kraftfahrzeug in einer Windschutzscheibe ein oberer Bereich außerhalb des zentralen Sichtfelds sein, der mit einem Funktionselement, beispielsweise einer PDLC-Folie, ausgestattet ist, das als elektrisch schaltbare Sonnenblende ausgebildet ist.

Die thermoplastischen Rahmenfolie und die Verbindungsfolien sind bevorzugt aus Material basierend auf dem gleichen Polymer, also bevorzugt basierend auf der Hauptkomponente Polyvinylbutyral (PVB), gefertigt, um eine optimale Verbindung zu gewährleisten. Die Materialzusammensetzung der thermoplastischen Rahmenfolie aus dem materialeinheitlich recycelten Material unterscheidet sich in der Art und der Zusammensetzung von der ersten und zweiten thermoplastischen Verbindungsfolie. Die Folien, also die thermoplastische Rahmenfolie und die thermoplastische(n) Verbindungsfolie(n) stehen in Kontakt und verschmelzen während des Laminiervorgangs. Die einzelnen Folienkomponenten bleiben dennoch insoweit erhalten, dass diese auch in der laminierten fertigen Verbundscheibe nachweisbar sind.

Die Dicke der thermoplastischen Rahmenfolie und der optionalen Verbindungsfolien beträgt typischerweise von 0,2 mm bis 2 mm, bevorzugt von 0,3 mm bis 1 mm, beispielsweise 0,38 mm, 0,76 mm, 0,81 mm oder 0,84 mm. Die Dicken der verschiedenen thermoplastischen Folien können dabei gleich oder unabhängig voneinander unterschiedlich sein.

Bevorzugt wird die Dicke der thermoplastischen Rahmenfolie so gewählt, dass sie in etwa die gleiche Dicke aufweist wie das Funktionselement. Dadurch wird der lokale Dickenunterschied der Verbundscheibe, der durch ein örtlich begrenztes Funktionselement eingebracht wird, kompensiert, so dass ein Bruch der Scheiben, bei Glasscheiben also Glasbruch, sowie lokale Druckstellen des Funktionselementes beim Laminieren vermieden werden können.

Die Dicke der thermoplastischen Rahmenfolie bestimmt sich also im Wesentlichen nach der Dicke des gewählten Funktionselementes, wobei besonders bevorzugt beide Dicken genau identisch sind. Dies ist in der Praxis aufgrund standardisierter Foliendicken der thermoplastischen Folien jedoch oft nicht möglich. In diesem Fall wird die Dicke der thermoplastischen Rahmenfolie größer als die Dicke des Funktionselementes gewählt, da andernfalls unerwünschter Druck auf das Funktionselement ausgeübt würde. Somit ist die Dicke der thermoplastischen Rahmenfolie bevorzugt größer oder gleich der Dicke des Funktionselementes. Ist der Versatz in der Dicke von thermoplastischer Rahmenfolie zu Funktionselement nicht optimal, können ggf. Ausgleichsfolien, wie sie beispielsweise in der EP 3 535 121 B1 beschrieben sind, eingesetzt werden.

Eine weitere bevorzugte Ausführungsform der erfindungsgemäßen Verbundscheibe sieht vor, dass die thermoplastische Rahmenfolie gefärbt oder getönt ist. Durch die Tönung oder Färbung kann im Herstellungsprozess vorteilhafterweise eine Verwechslung mit den üblicherweise transparenten, klaren Verbundfolien durch den optischen Unterschied ausgeschlossen werden. Darüber hinaus kann gegebenenfalls durch einen getönten oder gefärbten Randbereich durch die Rahmenfolie ggfs. auf einen Abdeckdruck verzichtet werden.

In einer bevorzugten Ausführungsform ist das Funktionselement ein Funktionselement mit veränderlichen optischen Eigenschaften, bevorzugt ein Funktionselement mit elektrisch schalt- oder regelbaren optischen Eigenschaften. Beispielsweise kann das Funktionselement ein SPD-, ein PDLC- oder ein elektrochromes Funktionselement sein. Bei einem SPD-Funktionselement (suspended particle device) enthält die aktive Schicht suspendierte Partikel, wobei die Absorption von Licht durch die aktive Schicht mittels Anlegen einer Spannung an die Flächenelektroden veränderbar ist. Die Absorptionsänderung beruht auf der Ausrichtung der stäbchenartigen Partikel im elektrischen Feld bei angelegter elektrischer Spannung. SPD-Funktionselemente sind beispielsweise aus EP 0876608 B1 und WO 2011033313 A1 bekannt. Bei einem PDLC-Funktionselement (polymer dispersed liquid crystal) enthält die aktive Schicht Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt. Gemäß einer Ausführungsform kann die Verbundscheibe der vorliegenden Erfindung mehrere Funktionselemente umfassen.

Bei einem elektrochromen Funktionselement ist die aktive Schicht des Funktionselements eine elektrochemisch aktive Schicht. Die Transmission von sichtbarem Licht ist vom Einlagerungsgrad von Ionen in die aktive Schicht abhängig, wobei die Ionen beispielsweise durch eine Ionenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

Eine andere Gruppe der möglichen Funktionselemente in einer erfindungsgemäßen Verbundscheibe sind Flüssigkristallelemente, die als sogenannte Guest-Host-Zelle aufgebaute Flüssigkristallzellen sind, die einen dichroitischen Farbstoff enthalten. Die Flüssigkristalle sind dabei das Medium (host), in dem der Farbstoff eingelagert ist (guest), wobei der Farbstoff sich bezüglich seiner räumlichen Orientierung der Vorzugsrichtung der Flüssigkristalle anpasst. Die Flüssigkristallmischung mit dichroitischem Farbstoff ist dabei zwischen zwei Trägerfolien eingebracht, die jeweils eine leitfähige Schicht als Flächenelektrode und eine Ausrichtungsschicht umfassen. Die Ausrichtungsschicht gibt dabei die Vorzugsrichtung der Flüssigkristalle im stromlosen Zustand vor. Bei Anlegen einer elektrischen Spannung an den Flächenelektroden ändern die Flüssigkristalle ihre Ausrichtung, wobei der zwischen den Flüssigkristallmolekülen eingelagerte Farbstoff die gleiche Änderung in seiner Orientierung vornimmt. Die optischen Eigenschaften der Flüssigkristallzelle mit eingelagertem Farbstoff sind somit in Abhängigkeit des angelegten elektrischen Feldes veränderlich, so dass die Zelle zwischen einem transparenten Zustand niedriger Trübung und niedriger Tönung sowie einem opaken Zustand niedriger Trübung und hoher Tönung schaltbar ist. Derartige Guest-Host-Zellen, umfassend eine Flüssigkristallmischung mit dichroitischem Farbstoff, sind beispielsweise aus WO 2014/126974 A, und Verglasungen, umfassend solche Funktionselemente, beispielsweise aus der EP 0964288 A2 bekannt. Verglasungen mit solchen Funktionselementen können also auf komfortable Weise elektrisch abgedunkelt werden.

Es ist auch möglich, dass das Funktionselement ein elektrolumineszentes Funktionselement, insbesondere ein OLED-Display, ist. Dabei enthält die aktive Schicht elektrolumineszente Materialen, insbesondere organische elektrolumineszente Materialen, deren Lumineszenz durch Anlegen einer Spannung angeregt wird. Elektrolumineszente Funktionselemente sind beispielsweise aus US 2004227462 A1 und WO 2010112789 A2 bekannt.

Die vorstehend beispielhaft genannten Funktionselemente sind für den Einsatz in einer erfindungsgemäßen Verbundscheibe geeignet und bevorzugt, jedoch ist dies keine abschließende Aufzählung und die erfinderische Kernidee, also der Einsatz von materialeinheitlich recycelter Akustik-PVB-Folie als thermoplastische Rahmenfolie für das jeweilige integrierte Funktionselement, ist nicht auf diese Funktionselemente eingeschränkt.

In einer weiteren Ausführungsform der erfindungsgemäßen Verbundscheibe ist die thermoplastische Rahmenfolie in Blickrichtung durch die Verbundscheibe, ausgehend von der ersten Scheibe, räumlich hinter und/oder vor einem opaken Abdeckdruck angeordnet.

Der opake Abdeckdruck ist vorzugsweise ein opaker Maskierungsstreifen. Der opake Maskierungsstreifen ist bevorzugt eine Beschichtung aus einer oder mehreren Schichten.

Gemäß einer bevorzugten Ausgestaltung der Verbundscheibe besteht der opake Abdeckdruck aus einer Einzelschicht. Dies hat den Vorteil einer besonders einfachen und kostengünstigen Fertigung der Verbundscheibe, da nur eine einzige Schicht für den Abdeckdruck, beispielsweise den Maskierungsstreifen, ausgebildet werden muss.

Der opake Abdeckdruck dient beispielsweise der Maskierung von im verbauten Zustand ansonsten durch die Scheibe erkennbaren Strukturen. Insbesondere bei einer Windschutzscheibe dient ein als Abdeckdruck aufgebrachter Maskierungsstreifen zum Maskieren einer Kleberaupe zum Einkleben der Windschutzscheibe in eine Fahrzeugkarosserie. Das bedeutet, er verhindert die Sicht auf die in aller Regel unregelmäßig aufgetragene Kleberaupe nach außen, so dass ein harmonischer Gesamteindruck der Windschutzscheibe entsteht. Andererseits dient der Maskierungsstreifen auch als UV-Schutz für das verwendete Klebematerial. Dauernde Bestrahlung mit UV-Licht schadet dem Klebematerial und würde die Verbindung der Verbundscheibe mit der Fahrzeugkarossiere im Laufe der Zeit lösen. Bei erfindungsgemäßen Verbundscheiben mit einem elektrisch steuerbaren Funktionselement kann der Maskierungsstreifen beispielsweise auch zum Abdecken von Sammelleitern und/oder Anschlusselementen dienen.

Der Maskierungsstreifen wird beispielsweise auf die in Einbaulage als Außenscheibe dienende Scheibe aufgedruckt, insbesondere im Siebdruckverfahren. Dabei wird die Druckfarbe durch ein feinmaschiges Gewebe hindurch auf die Scheibe gedruckt. Die Druckfarbe wird dabei beispielsweise mit einer Gummirakel durch das Gewebe hindurchgepresst. Das Gewebe weist Bereiche auf, welche für die Druckfarbe durchlässig sind, neben Bereichen, welche für die Druckfarbe undurchlässig sind, wodurch die geometrische Form des Drucks festgelegt wird. Das Gewebe fungiert somit als Schablone für den Druck. Die Druckfarbe enthält mindestens ein Pigment und Glasfritten, suspendiert in einer flüssigen Phase (Lösungsmittel), beispielsweise Wasser oder organische Lösungsmittel wie Alkohole. Das Pigment ist typischerweise ein Schwarzpigment, beispielsweise Pigmentruß (*Carbon Black*), Anilinschwarz, Beinschwarz, Eisenoxidschwarz, Spinellschwarz und/oder Graphit.

Nach dem Aufdrucken der Druckfarbe wird die Scheibe, beispielsweise Glasscheibe, einer Temperaturbehandlung unterzogen, wobei die flüssige Phase durch Verdampfen ausgetrieben wird und die Glasfritten aufgeschmolzen werden und sich dauerhaft mit der Glasoberfläche verbinden. Die Temperaturbehandlung wird typischerweise bei Temperaturen im Bereich von 450°C bis 700°C durchgeführt. Als Maskierungsstreifen verbleibt das Pigment in der durch die aufgeschmolzene Glasfritte gebildeten Glasmatrix. Der Maskierungsstreifen weist bevorzugt eine Dicke von 5 µm bis 50 µm auf, besonders bevorzugt von 8 µm bis 25 µm.

Die erste Scheibe und/oder die zweite Scheibe enthalten bevorzugt Glas, besonders bevorzugt Flachglas, Floatglas, Quarzglas, Borosilikatglas, Kalk-Natron Glas, oder klare Kunststoffe, vorzugsweise starre klare Kunststoffe, insbesondere Polycarbonat, Polymethylmethacrylat und/oder Gemische davon. Die erste Scheibe und/oder die zweite Scheibe sind in einer möglichen Ausführungsform transparent, insbesondere für die Verwendung der Scheibe als Windschutzscheibe, Rückscheibe oder hintere oder vordere Seitenscheibe eines Fahrzeugs oder anderen Verwendungen, bei denen eine hohe Lichttransmission erwünscht ist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Im Sinne der vorliegenden Erfindung bedeutet "transparent", dass die Gesamttransmission für sichtbares Licht (Lichttransmission nach ISO 9050:2003) bevorzugt eine Durchlässigkeit von mehr als 50% und insbesondere von mehr als 60%, beispielsweise mehr als 70%, aufweist. Entsprechend bedeutet "opak" eine Lichttransmission von weniger als 10 %, bevorzugt weniger als 5 % und insbesondere 0%.

Die Erfindung betrifft weiterhin ein Verfahren zur Herstellung einer Verbundscheibe mit einem integrierten Funktionselement, wie es vorstehend in verschiedenen Ausführungsformen beschrieben wurde, mindestens umfassend die folgenden Schritte:
A) Bereitstellen einer ersten Scheibe,
B) Bereitstellen mindestens einer thermoplastischen Rahmenfolie mit einer Aussparung,
C) Anordnen eines Funktionselements in der Aussparung der thermoplastischen Rahmenfolie,
D) Bereitstellen einer zweiten Scheibe,
E) das anschließende Verbinden eines mit den vorherigen Schritten A) bis D) gebildeten Schichtstapels zu einer Verbundscheibe durch Lamination unter Einwirkung von Hitze, Druck und/oder Vakuum,
wobei die in Schritt B) bereitgestellte thermoplastische Rahmenfolie eine aus Alt-Akustik-PVB-Folien materialeinheitlich recycelte, re-extrudierte PVB-Folie ist.

Die Nachhaltigkeit und die Kreislaufwirtschaft in der Verbundscheibenherstellung mit integrierten Funktionselementen kann durch den erfindungsgemäßen Einsatz von materialeinheitlich recycelter Alt-Akustik-PVB-Folie zur Bereitstellung der thermoplastischen Rahmenfolie in Schritt B) erheblich gesteigert und verbessert werden. Zudem kann beiden Entwicklungen, nämlich dem erhöhten Bedarf an thermoplastischen Rahmenfolien in Verbundscheiben mit integrierten Funktionselementen, sowie dem erhöhten Anteil an anfallender Alt-Akustik-PVB-Folie, mit der erfindungsgemäßen Maßnahme der Verwendung materialeinheitlich recycelter Alt-Akustik-PVB Folie eine nachhaltige, kosteneffiziente Lösung entgegengesetzt werden.

Gemäß einer Ausführungsform ist die in Schritt B) bereitgestellte thermoplastische Rahmenfolie eine aus Alt-Akustik-PVB-Folien aus Alt-Verbundscheiben materialeinheitlich recycelte, re-extrudierte PVB-Folie.

Die thermoplastische Rahmenfolie wird in Schritt B) beispielsweise durch mechanische Zerkleinerung der mehrschichtigen Alt-Akustik-PVB-Folie zu einem Granulat, Aufschmelzen und Re-extrusion zur thermoplastischen Rahmenfolie bereitgestellt.

Die Aussparung wird in Schritt B) beispielsweise in bekannter Weise durch Ausstanzen oder Ausschneiden eines flächigen Bereichs aus der thermoplastischen Rahmenfolie, im Wesentlichen angepasst auf die Abmessungen des Funktionselements, erzeugt. Das Ausschneiden der Aussparung kann mit bekannten Schneidwerkzeugen, beispielsweise mittels Laser, erfolgen.

Die thermoplastische Rahmenfolie wird im Schichtstapel zwischen der ersten und der zweiten Scheibe angeordnet und ist in der resultierenden Verbundscheibe Teil der thermoplastischen Zwischenschicht. Dies bedeutet, die thermoplastische Zwischenschicht der erfindungsgemäßen Verbundscheibe umfasst die thermoplastische Rahmenfolie. Die thermoplastische Rahmenfolie kann dabei direkt mit der ersten und/oder zweiten Scheibe in Kontakt stehen und mit dieser durch Lamination verbunden werden. In einer anderen bevorzugten Ausgestaltung ist die thermoplastische Rahmenfolie, mit dem in die Aussparung eingesetzten Funktionselement, über jeweils mindestens eine weitere thermoplastische Folie, der Verbindungsfolie (auch Verbundfolie genannt), mit jeder Scheibe verbunden.

Die bereitgestellten Scheiben in Schritt A) und D) enthalten bevorzugt Glas, besonders bevorzugt Flachglas, Floatglas, Quarzglas, Borosilikatglas, Kalk-Natron-Glas oder klare Kunststoffe, besonders bevorzugt starre klare Kunststoffe,
beispielsweise Polycarbonat oder Polymethylmethacrylat. Die Scheiben können klar und transparent sein oder auch getönt oder gefärbt. Die Dicke der Scheiben kann breit variieren und so den Erfordernissen im Einzelfall angepasst werden. Die Dicke jeder Scheibe beträgt bevorzugt von 0,5 mm bis 15 mm, besonders bevorzugt von 1 mm bis 5 mm. Die Scheiben und die resultierende Verbundscheibe können eine beliebige dreidimensionale Form aufweisen. Die erfindungsgemäße Verbundscheibe kann plan oder leicht oder stark in einer Richtung oder in mehreren Richtungen des Raumes gebogen sein.

Die erste und die zweite Scheibe der Verbundscheibe können, beispielsweise bei Verwendung als Fahrzeugverglasung, vor dem Einsatz in Schritt A) und Schritt D) und Bildung eines Schichtstapels zur Lamination gebogen werden. Die Scheiben können einzeln oder gemeinsam gebogen werden. Bevorzugt werden die Scheiben gemeinsam (d.h. zeitgleich und durch dasselbe Werkzeug) kongruent gebogen, weil dadurch die Form der Scheiben für die später erfolgende Laminierung optimal aufeinander abgestimmt ist.

Soll die Verbundscheibe als gebogene Fahrzeugverglasung fungieren, so wird zumindest die als Außenscheibe verwendete Scheibe vor der Lamination einem Biegeprozess unterzogen. In einer bevorzugten Ausführung wird die als Innenscheibe eingesetzte Scheibe ebenfalls einem Biegeprozess unterzogen. Dies ist insbesondere bei starken Biegungen in mehrere Richtungen des Raums (sogenannte dreidimensionale Biegungen) vorteilhaft.

Die erste Scheibe und/oder die zweite Scheibe können thermisch oder chemisch vorgespannt, teilvorgespannt oder nicht vorgespannt sein.

In einer bevorzugten Ausführungsform des Verfahrens wird in Schritt B) eine thermoplastische Rahmenfolie aus materialeinheitlich recyceltem Akustik-PVB-Granulat re-extrudiert, wobei das eingesetzte Granulat eine mittlere Partikelgröße von < 6 mm und/oder das Granulat eine Granulat-Partikel-Kantenlänge von 15 mm oder weniger aufweist. Das Granulat wird durch mechanische Zerkleinerung von Alt-Akustik-PVB-Folien aus zum Beispiel Alt-Verbundscheiben, beispielsweise durch Häckseln, in Granulat-Partikel geeigneter Größe hergestellt. Die Granulat-Herstellung und - verarbeitung zur thermoplastischen Rahmenfolie erfolgt dabei gemäß üblichen und bekannten Prozessschritten und lässt sich problemlos in die serielle Fertigung integrieren. Hierbei sind keine oder nur geringfügige Anpassungen notwendig. Die mittlere Partikelgröße und die Granulat-Partikel-Kantenlänge lassen sich mit üblichen Verfahren, wie beispielsweise Lichtmikroskopie, bestimmen.

In einer bevorzugten Ausführung des Verfahrens wird die thermoplastische Rahmenfolie aus einer Alt-Akustik-PVB-Folie mit zwei PVB-Deckschichten und einer dazwischen angeordneten PVB-Kernschicht ausgebildet und bereitgestellt, wobei der Materialanteil in Gewichtsprozent von PVB-Deckschicht zu PVB-Kernschicht zwischen 8:1 und 6:1, bevorzugt zwischen 7,5:1 und 6,5:1, beispielsweise 7:1, beträgt.

In einer anderen bevorzugten Ausführungsform des Verfahrens wird in Schritt B) die thermoplastische Rahmenfolie aus dem Material einer materialeinheitlich recycelten Alt-Akustik-PVB-Folie ausgebildet und bereitgestellt, wobei der Hydroxygruppen-Anteil von Deckschicht zu Kernschicht in der eingesetzten Alt-Akustik-PVB-Folie zwischen 1,2 und 2,3 liegt, beispielsweise bei 1,64.

In einer weiteren bevorzugten Ausführungsform des Verfahrens wird in Schritt B) die thermoplastische Rahmenfolie aus dem Material einer materialeinheitlich recycelten Alt-Akustik-PVB-Folie ausgebildet und bereitgestellt, wobei der Weichmacheranteil von Deckschicht zu Kernschicht in der eingesetzten Alt-Akustik-PVB-Folie zwischen 0,7 und 0,8, bevorzugt in einem Bereich von 0,75 und 0,77, liegt.

In einer anderen bevorzugten Ausführungsform des Verfahrens wird für die Bereitstellung einer thermoplastischen Rahmenfolie in Schritt B) eine getönte oder gefärbte thermoplastische Rahmenfolie aus Alt-Akustik-PVB-Granulat re-extrudiert, wobei das eingesetzte Granulat mit einem Farbstoff und/oder mit einem Granulat aus einer getönten oder gefärbten Alt-PVB-Folie versetzt wird. Hierdurch ergibt sich in der Produktion eine sichere optische Unterscheidbarkeit von den transparenten, standardmäßig ganzflächig, also auch für einen Sichtbereich eingesetzten, Bereich einer Verbundscheibe, beispielsweise von ganzflächig eingesetzten transparenten, klaren Verbindungsfolien. Durch die Verwendung von getöntem Granulat aus getönter Alt-PVB-Folie kann in dieser Ausführungsform die ressourcenschonende, nachhaltige Fertigung weiter optimiert werden.

Die dem Material der Alt-Akustik-PVB zugesetzte, gefärbte oder getönte Alt-PVB-Folie kann beispielsweise eine Transmission TL von maximal 50%, also beispielsweise von 40%, 30%, 20%, 5% oder 2 %, aufweisen. Der Anteil in Gewichtsprozent von getöntem Alt-PVB-Material zu dem Material aus der klaren, ungefärbten Alt-Akustik-PVB-Folie kann beispielsweise in einem Bereich von 1:9 bis 1:5 liegen. Beispielsweise kann bei einem TL von 30% des getönten Materials ein Verhältnis von 1:8 eingesetzt werden. Das Verhältnis der Materialien wird so ausgewählt, dass die daraus recycelte PVB-Folie, die dann in einer erfindungsgemäßen Verbundscheibe als thermoplastische Rahmenfolie eingesetzt wird, zweckmäßigerweise eine Tönung aufweist, die optisch von einem Benutzer von einer ungetönten, transparenten Folie unterschieden werden kann.

In einer anderen bevorzugten Ausgestaltung des Verfahrens können in Schritt B) mehrere kongruent flächig übereinander angeordnete thermoplastische Rahmenfolien mit Aussparungen bereitgestellt werden, die im Laminationsschritt E) miteinander verbunden werden. Bevorzugt sind diese flächig übereinander angeordneten thermoplastischen Rahmenfolien aus identischem Alt-Akustik-PVB-Material gefertigt. Durch diese Maßnahme können auch bei standardisierten Dicken der einzelnen PVB-Rahmenfolien unterschiedliche Gesamtdicken im Hinblick auf die Abmessungen des zu integrierenden Funktionselements erhalten werden.

In einer anderen Ausführungsform des Verfahrens ist vorgesehen, dass die thermoplastische Rahmenfolie in Schritt B) einstückig gefertigt und nach Ausbilden einer Aussparung in Schritt C) eingesetzt wird. Dies ist vorteilhaft für eine serielle industrielle Fertigung, da die Handhabung und Ausrichtung der Folien im Schichtstapel besonders einfach ist. Alternativ wird die thermoplastische Rahmenfolie in zwei oder mehr Abschnitten, also mit anderen Worten in einer Lage in Teilstücken mit aneinander grenzenden Kanten, als Rahmen um das Funktionselement herum in Schritt C) angeordnet, die wiederum in Schritt E) miteinander zum Rahmen verschmelzen. Dies bietet gegebenenfalls die Möglichkeit, auch kleinere Teilstücke, die beispielsweise bei der Ausbildung der Aussparung in einer Rahmenfolie in Schritt B) anfallen, in den Herstellprozess von Verbundscheiben zu verwenden, ohne diese erneut einer Re-extrusion zur Folie zuzuführen.

Eine weitere bevorzugte Ausführung des erfindungsgemäßen Verfahrens sieht vor, dass im Schichtstapel vor der Lamination zur Verbundscheibe in Schritt E) zwischen der ersten und/oder der zweiten Scheibe und der thermoplastischen Rahmenfolie mit dem Funktionselement eine erste und/oder zweite Verbindungsfolie angeordnet wird. Mit anderen Worten wird also zwischen der ersten Scheibe und der thermoplastischen Rahmenfolie und dem integrierten Funktionselement eine erste thermoplastische Verbindungsfolie und/oder zwischen der zweiten Scheibe und der thermoplastischen Rahmenfolie und dem integrierten Funktionselement eine zweite thermoplastische Verbindungsfolie angeordnet, wobei die erste und/oder die zweite thermoplastische Verbindungsfolie bevorzugt eine PVB-Folie ist.

Die thermoplastische Rahmenfolie steht mit den benachbarten thermoplastischen Verbindungsfolien in Kontakt und verschmilzt während des Laminiervorgangs in Schritt E) mit der ersten und/oder der zweiten thermoplastischen Verbindungsfolie. Die einzelnen Folienkomponenten bleiben dennoch insoweit erhalten, dass diese auch in der laminierten Verbundscheibe nachweisbar sind.

Die Lamination des Schichtstapels zur Verbundscheibe in Schritt E) erfolgt typischerweise unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon. Die Lamination umfasst typischerweise das Entlüften des Schichtstapels, bevorzugt bei Raumtemperatur, und das anschließende Aufschmelzen der thermoplastischen Folien der Zwischenschicht zur Herstellung des Verbunds, bevorzugt bei Temperaturen größer als 70 °C.

Insbesondere bei Verwendung der erfindungsgemäßen Verbundscheibe in Fahrzeugen ist es vorteilhaft, darüberhinausgehende Funktionen zu implementieren, um die negativen Auswirkungen von Witterungseinflüssen wie starker Sonneneinstrahlung oder Eisbildung zu verringern.

Ein weiterer Aspekt der Erfindung umfasst die Verwendung der erfindungsgemäßen Verbundscheibe in Fortbewegungsmitteln für den Verkehr auf dem Lande, in der Luft oder zu Wasser, bevorzugt in Kraftfahrzeugen, beispielsweise als Windschutzscheibe, Heckscheibe, Seitenscheibe und / oder Dachscheibe.

Es versteht sich, dass die vorstehend genannten und nachstehend näher erläuterten Merkmale, sei es zur Verbundscheibe und/oder zum Verfahren beschrieben, nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen. Es sei denn, Merkmale oder Ausführungsformen sind explizit nur als Alternativen zueinander beschrieben oder schließen sich aus.

Im Folgenden wird die Erfindung anhand von Figuren und Ausführungsbeispielen näher erläutert. Die Figuren sind schematische Darstellungen und nicht maßstabsgetreu. Die Zeichnungen schränken die Erfindung in keiner Weise ein.

Es zeigen:
- Figur 1: eine Draufsicht auf eine erfindungsgemäße Verbundscheibe 1 mit Funktionselement 2,
- Figur 2: einen Querschnitt durch die Verbundscheibe 1 gemäß Figur 2 entlang der Schnittlinie A-A'.

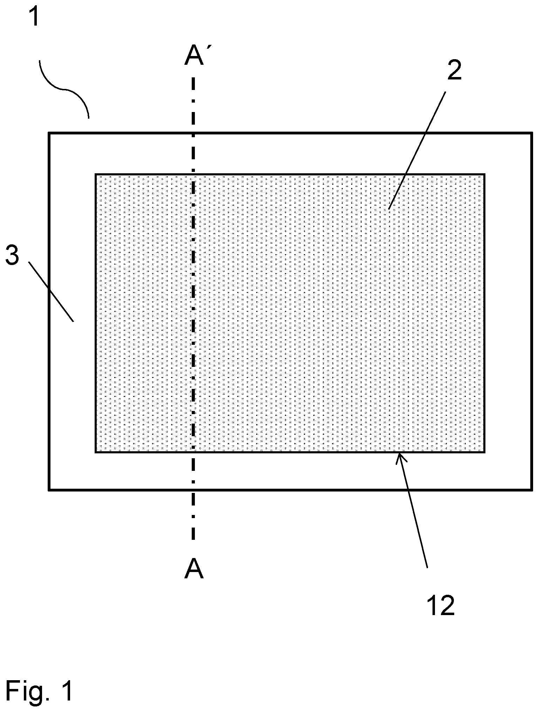

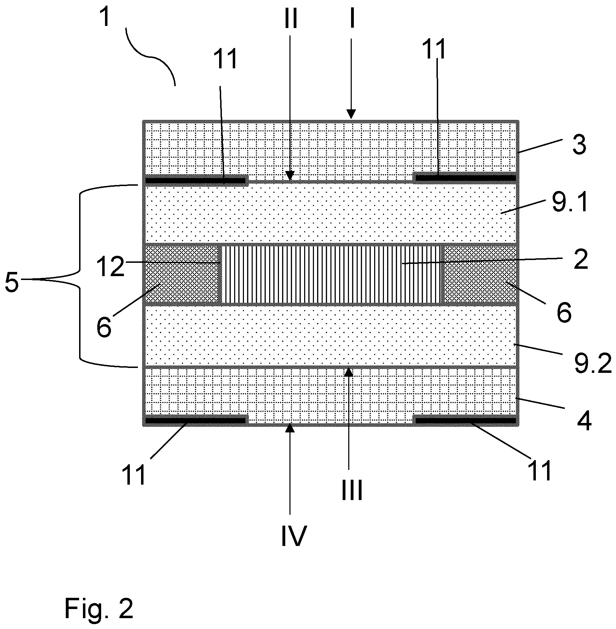

Figur 1 zeigt eine schematische Draufsicht auf eine erfindungsgemäße Verbundscheibe 1 mit einem integrierten Funktionselement 2, welches von einer thermoplastischen Rahmenfolie 6 (siehe Figur 2) umgeben ist. Die Seitenkanten 12 des Funktionselements 2 sind bevorzugt bündig mit der thermoplastischen Rahmenfolie 6 angeordnet, so dass zwischen der Seitenkante 12 des Funktionselements 2 und der Seitenkante 12 der thermoplastischen Rahmenfolie 6, bevorzugt umlaufend, keine Lücke ausgebildet ist. So ist die Grenze zwischen thermoplastischer Rahmenfolie 6 und Funktionselement 2 optisch unauffälliger.

Das Funktionselement 2 ist bevorzugt ein elektrisch steuerbares optisch veränderbares Funktionselement 2, beispielsweise ein PDLC-, SPD-Element oder eine Guest Host-Zelle. Beispielsweise kann das Funktionselement 2 eine aktive Schicht umfassen, welche zwischen einer ersten Flächenelektrode und einer zweiten Flächenelektrode (nicht gezeigt) angeordnet ist. Die aktive Schicht weist die steuerbaren optischen Eigenschaften auf, welche über die an die Flächenelektroden angelegte Spannung gesteuert werden können. Die Flächenelektroden und die aktive Schicht des Funktionselements 2 sind typischerweise im Wesentlichen parallel zu den Oberflächen der ersten Scheibe 3 und der zweiten Scheibe 4 angeordnet. Die Flächenelektroden sind elektrisch leitend mit Sammelleitern (nicht gezeigt) verbunden, über die das Funktionselement 2 in üblicher Weise an einer externen Spannungsquelle angeschlossen werden kann. Die Sammelleiter (bus bars) sind beispielsweise als Streifen eines elektrisch leitfähigen Materials oder elektrisch leitfähige Aufdrucke mit den Flächenelektroden verbunden. Bevorzugt sind die Sammelleiter als elektrisch leitfähige Aufdrucke umfassend Silber ausgeführt.

Die Ansicht der Figur 2 entspricht einem Querschnitt der in Figur 1 gezeigten Verbundscheibe 1 entlang der Schnittlinie A-A'. Auf die erste Scheibe 3 ist die erste thermoplastische Verbindungsfolie 9.1 aufgelegt, auf die thermoplastische Verbindungsfolie 9.1 folgt das Funktionselement 2, umgeben von der thermoplastischen Rahmenfolie 6. Das Funktionselement 2 wird von der zweiten thermoplastischen Verbindungsfolie 9.2 abgedeckt und der Schichtstapel durch die zweite Scheibe 4 abgeschlossen. Das Funktionselement 2 kann grundsätzlich auch nur in Teilen der Verbundscheibe 1 eingelegt sein. Gemäß Figur 1 und 2 ist das Funktionselement 2 beispielsweise nur in einem Sichtbereich der Verbundscheibe 1 angeordnet, wobei ein umlaufender Randbereich verbleibt, der frei von Funktionselement 2 ist. Die umlaufende Kante 12 des Funktionselements 2 ist somit im Vergleich zur umlaufenden Kante der Verbundscheibe 1, die von den Scheiben 3, 4 gebildet wird, in Richtung der Flächenmitte der Verbundscheibe 1 zurückversetzt. Im Randbereich zwischen umlaufender Kante 12 des Funktionselements 2 und Kante der Scheiben 3, 4 ist erfindungsgemäß eine thermoplastische Rahmenfolie 6, ausgebildet aus materialeinheitlich recycelter Akustik-PVB-Folie, eingelegt, die den Dickenunterschied zwischen Randbereich ohne Funktionselement 2 und Bereich mit Funktionselement 2 ausgleicht. Die äußeren Seitenkanten der thermoplastischen Rahmenfolie 6 werden bevorzugt deckungsgleich zu den Seitenkanten der ersten und der zweiten thermoplastischen Verbindungsfolie 9.1, 9.2 angeordnet. Die thermoplastische Rahmenfolie 6 kann sich in ihrer Dicke von der Dicke der ersten und/oder zweiten Verbindungsfolie 9.1, 9.2 unterscheiden. Bevorzugt wird die Dicke der thermoplastischen Rahmenfolie 6 so gewählt, dass sie in etwa die gleiche Dicke aufweist wie das Funktionselement 2. Dadurch wird der lokale Dickenunterschied in der Verbundscheibe 1, der durch ein örtlich begrenztes Funktionselement 2 eingebracht wird, kompensiert, so dass Glasbruch sowie lokale Druckstellen des Funktionselementes 2 beim Laminieren zur Verbundscheibe 1 vermieden werden können.

Durch die Verwendung einer recycelten thermoplastischen Rahmenfolie 6 kann die Kosteneffizienz und die Nachhaltigkeit des Herstellverfahrens von Verbundscheiben1 mit integrierten Funktionselementen 2 erheblich gesteigert werden. Die thermoplastische Rahmenfolie 6 steht mit den benachbarten thermoplastischen Verbindungsfolien 9.1, 9.2 in Kontakt und verschmilzt während des Laminiervorgangs mit den thermoplastischen Verbindungsfolien. Die einzelnen Folienkomponenten 6, 9.1, 9.2 in der thermoplastischen Zwischenschicht bleiben dennoch insoweit erhalten, dass diese auch in der laminierten Verbundscheibe 1 nachweisbar sind. Durch den Einsatz der aus Alt-Akustik-PVB-Folie recycelten thermoplastischen Rahmenfolie 6 unterscheidet sich die Materialzusammensetzung von üblich eingesetzten PVB-Folien, da beispielsweise der Weichmachergehalt und der Hydroxygruppenanteil voneinander abweichen. Zusätzlich sind durch die schlechte Mischbarkeit der Deckschicht- und Kernschicht-Materialien der Alt-Akustik-PVB in der aus Granulat erzeugten Schmelze diese auch in der re-extrudierten, fertigen recycelten thermoplastischen Rahmenfolie 6 trotz der festen Verbindung innerhalb der thermoplastischen Rahmenfolie 6 noch nachweisbar, die optisch ggfs. auch durch eine Trübung wahrnehmbar ist. Die thermoplastische Rahmenfolie 6 kann transparent oder auch getönt oder gefärbt sein.

Selbstverständlich können optional darüberhinausgehende Elemente, wie beispielsweise weitere elektrisch schaltbare Funktionsfolien oder andere Funktionselemente, vorhanden sein.

In eingebautem Zustand, zum Beispiel in einem Fahrzeug, dient die Verbundscheibe 1 zur Abtrennung eines Innenraums von der äußeren Umgebung. In Einbaulage kann beispielsweise die erste Scheibe 3 die Außenscheibe mit einer außenseitigen Oberfläche I und einer innenseitigen Oberfläche II sein und die zweite Scheibe 4 die Innenscheibe mit einer außenseitigen Oberfläche III und einer zum Innenraum gerichteten innenseitigen Oberfläche IV der Verbundscheibe 1 ausbilden. Ist die Verbundscheibe 1 eine Windschutzscheibe, so liegt die Dicke der Außenscheibe bevorzugt zwischen 0,8 mm und 2,1 mm und die Dicke der Innenscheibe liegt bevorzugt zwischen 0,5 mm und 1,8 mm.

Ist die Verbundscheibe 1 beispielsweise eine Dachscheibe eines Kraftfahrzeugs, so liegt die Dicke der Außenscheibe bevorzugt zwischen 1,1 mm und 2,1 mm und die Dicke der Innenscheibe bevorzugt zwischen 0,5 mm und 2,1 mm. In einer bevorzugten Ausgestaltung ist eine Dachscheibe symmetrisch aufgebaut, wobei zumindest die Außenscheibe und die Innenscheibe eine gleiche Dicke aufweisen.

Die Verbundscheibe 1 ist in ihrer bevorzugten Ausführungsform als Fahrzeugverglasung bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe 1 kann aber auch plan sein, beispielsweise wenn sie als Scheibe für Busse, Züge, Traktoren oder als Gebäudeverglasung vorgesehen ist. Der vereinfachten Darstellung halber ist eine dreidimensionale Biegung der Verbundscheibe 1 in den Figuren nicht dargestellt.

Im Randbereich der Verbundscheibe 1, in dem die thermoplastische Rahmenfolie 6 eingelegt ist, können die Scheiben 3, 4 optional mit einem opaken Abdeckdruck 11, beispielsweise auf der innenseitigen Oberfläche der Außenscheibe II und/oder auf der innenseitigen Oberfläche IV der Innenscheibe versehen sein. Dieser maskiert die thermoplastische Rahmenfolie 6 sowie die Seitenkante 12 des Funktionselements 2, sowie Kleberaupen und/oder elektrische Anschlüsse, so dass diese für den Betrachter nicht sichtbar sind, was zu einem ästhetischen Erscheinungsbild der Verbundscheibe 1 beitragen kann. Derartige Maskierungen 11 mittels Schwarzdruck sind dem Fachmann geläufig.

**Tabelle 1 Beispiel 0,76 mm Alt-Akustik-PVB-Folie, resultierende thermoplastische Rahmenfolie und Spezifikationen**

| 0,76 mm Alt-Akustik-PVB | Deckschicht | Kernschicht | Deck-/Kernschicht | Rahmenfolie |
|---|---|---|---|---|
| Dicke [mm] | 0,66 | 0,10 | 6,60 | |
| Weichmachergehalt Gew.% | 28,50% | 37,50% | 0,76 | 29,68% |
| OH-Anteil Gew.% | 18,00% | 11,00% | 1,64 | 17,08% |

Der Weichmachergehalt der resultierenden Rahmenfolie errechnet sich nach der folgenden Formel: ${w}_{R} = \frac{\left({w}_{D}⋅{d}_{D}+{w}_{K}⋅{d}_{K}\right)}{\left({d}_{D}+{d}_{K}\right)}$ mit
*w_{R}*: Weichmachergehalt thermoplastische Rahmenfolie
*w_{D}*: Weichmachergehalt Deckschicht
*d_{D}*: Dicke Deckschicht
*w_{K}*: Weichmachergehalt Kernschicht
*d_{K}*: Dicke Kernschicht

Der Hydroxygehalt der resultierenden thermoplastischen Rahmenfolie errechnet sich analog nach der folgenden Formel: ${OH}_{R} = \frac{\left({OH}_{D}⋅{d}_{D}+{OH}_{K}⋅{d}_{K}\right)}{\left({d}_{D}+{d}_{K}\right)}$ mit
*OH_{R}:* Hydroxygruppengehalt thermoplastische Rahmenfolie
*OH_{D}*: Hydroxygruppengehalt Deckschicht
*d_{D}*: Dicke Deckschicht
*OH_{K}*: Hydroxygruppengehalt Kernschicht
*d_{K}:* Dicke Kernschicht

**Tabelle 2 Bevorzugte Variationsbreite von Weichmachergehalt und OH-Anteil in der eingesetzten Alt-Akustik-PVB-Folie**

| | | |
|---|---|---|
| Weichmachergehalt Gew.% | Deckschicht | 28,5 % ± 1,0 % |
| | Kernschicht | 37,5 % ± 0,8 % |
| OH-Anteil Gew.% | Deckschicht | 18% ± 2 % |
| | Kernschicht | 11% ± 2 % |

Bevorzugt liegt der Hydroxygruppenanteil (OH-Gruppen-Anteil) der materialeinheitlich recycelten Alt-Akustik-PVB-Folie, also entsprechend der thermoplastischen Rahmenfolie 6 in einer erfindungsgemäßen Verbundscheibe, in einem Bereich von 14,7 Gew.% bis 19,4 Gew.%.

### Bezugszeichenliste

1 Verbundscheibe
2 Funktionselement (bevorzugt mit elektrisch schaltbaren optischen Eigenschaften)
3 erste Scheibe (beispielsweise Außenscheibe)
4 zweite Scheibe (beispielsweise Innenscheibe)
5 thermoplastische Zwischenschicht
6 thermoplastische Rahmenfolie
9.1 erste thermoplastische Verbindungsfolie
9.2 zweite thermoplastische Verbindungsfolie
11 opaker Abdeckdruck (Maskierungsdruck)
12 umlaufende Seitenkante des Funktionselements 2
A-A' Schnittlinie
I Außenseite der ersten Scheibe 3
II Innenseite der ersten Scheibe 3
III Außenseite der zweiten Scheibe 4
IV Innenseite der zweiten Scheibe 4

## Patentansprüche

1. Verbundscheibe (1) mit integriertem Funktionselement (2), umfassend eine erste Scheibe (3) und eine zweite Scheibe (4) und eine dazwischen angeordnete thermoplastische Zwischenschicht (5), **dadurch gekennzeichnet, dass** das Funktionselement (2) in einer Aussparung in mindestens einer thermoplastischen Rahmenfolie (6) zwischen der ersten Scheibe (3) und der zweiten Scheibe (4) angeordnet ist, **dadurch gekennzeichnet, dass** die thermoplastische Rahmenfolie (6) aus einer materialeinheitlich recycelten Alt-Akustik-PVB-Folie ausgebildet ist.

2. Verbundscheibe (1) nach Anspruch 1, **dadurch gekennzeichnet, dass** die thermoplastische Rahmenfolie (6) eine PVB-Folie ist, deren Hydroxygruppen-Anteil in Gewichtsprozent zwischen 14,5 % und 19,5 %, bevorzugt zwischen 16,5% und 17,5%, beträgt.

3. Verbundscheibe (1) nach Anspruch 1 oder 2, **dadurch gekennzeichnet, dass** der Weichmachergehalt in der thermoplastischen Rahmenfolie (6) in Gewichtsprozent zwischen 28% und 32% beträgt.

4. Verbundscheibe (1) nach einem der Ansprüche 1 bis 3, **dadurch gekennzeichnet, dass** zwischen der ersten Scheibe (3) und der thermoplastischen Rahmenfolie (6) und dem Funktionselement (2) eine erste thermoplastische Verbindungsfolie (9.1) und zwischen der zweiten Scheibe (4) und der thermoplastischen Rahmenfolie (6) und dem Funktionselement (2) eine zweite thermoplastische Verbindungsfolie (9.2) angeordnet ist, wobei die erste und/oder die zweite thermoplastische Verbindungsfolie (9.1, 9.2) bevorzugt eine PVB-Folie ist.

5. Verbundscheibe (1) nach einem der Ansprüche 1 bis 4, **dadurch gekennzeichnet, dass** die thermoplastische Rahmenfolie (6) gefärbt oder getönt ist.

6. Verbundscheibe (1) nach einem der Ansprüche 1 bis 5, **dadurch gekennzeichnet, dass** das Funktionselement (2) ein Funktionselement (2) mit veränderlichen optischen Eigenschaften ist, bevorzugt ein Funktionselement (2) mit elektrisch schalt- oder regelbaren optischen Eigenschaften.

7. Verbundscheibe (1) nach einem der Ansprüche 1 bis 6, **dadurch gekennzeichnet, dass** die thermoplastische Rahmenfolie (6) in Blickrichtung durch die Verbundscheibe (1), ausgehend von der ersten Scheibe (3), räumlich hinter und/oder vor einem opaken Abdeckdruck (11) angeordnet ist.

8. Verfahren zur Herstellung einer Verbundscheibe (1) mit einem integrierten Funktionselement (2) nach einem der Ansprüche 1 bis 7, mindestens umfassend folgende Schritte:
A) Bereitstellen einer ersten Scheibe (3),
B) Bereitstellen mindestens einer thermoplastischen Rahmenfolie (6) mit einer Aussparung,
C) Anordnen eines Funktionselements (2) in der Aussparung der thermoplastischen Rahmenfolie (6),
D) Bereitstellen einer zweiten Scheibe (4),
E) das anschließende Verbinden eines mit den vorherigen Schritten A) bis D) gebildeten Schichtstapels zu einer Verbundscheibe (1) durch Lamination unter Einwirkung von Hitze, Druck und/oder Vakuum,
**dadurch gekennzeichnet, dass** die thermoplastische Rahmenfolie (6) in Schritt B) eine materialeinheitlich aus Alt-Akustik-PVB-Folien recycelte, re-extrudierte PVB-Folie ist.

9. Verfahren nach Anspruch 8, **dadurch gekennzeichnet, dass** in Schritt B) eine thermoplastische Rahmenfolie (6) aus materialeinheitlich recyceltem Alt-Akustik-PVB-Granulat re-extrudiert wird, wobei das eingesetzte Granulat eine mittlere Partikelgröße von < 6 mm und/oder das Granulat eine Granulat-Partikel-Kantenlänge von 15 mm oder weniger aufweist.

10. Verfahren nach Anspruch 8 oder 9, **dadurch gekennzeichnet, dass** in Schritt B) die Rahmenfolie (6) aus einer Alt-Akustik-PVB-Folie mit zwei PVB-Deckschichten und einer dazwischen angeordneten PVB-Kernschicht ausgebildet ist, wobei der Materialanteil in Gewichtsprozent von PVB-Deckschicht zu PVB-Kernschicht zwischen 8:1 und 6:1, bevorzugt zwischen 7,5:1 und 6,5:1, beträgt.

11. Verfahren nach einem der Ansprüche 8 bis 10, **dadurch gekennzeichnet, dass** in Schritt B) die thermoplastische Rahmenfolie (6) aus dem Material einer materialeinheitlich recycelten Alt-Akustik-PVB-Folie ausgebildet und bereitgestellt wird, wobei der Hydroxygruppen-Anteil von Deckschicht zu Kernschicht in der eingesetzten Alt-Akustik-PVB-Folie zwischen 1,2 und 2,3 liegt.

12. Verfahren nach einem der Ansprüche 8 bis 11, **dadurch gekennzeichnet, dass** in Schritt B) die thermoplastische Rahmenfolie (6) aus dem Material einer materialeinheitlich recycelten Alt-Akustik-PVB-Folie ausgebildet und bereitgestellt wird, wobei der Weichmacheranteil von Deckschicht zu Kernschicht in der eingesetzten Alt-Akustik-PVB-Folie zwischen 0,7 und 0,8, bevorzugt in einem Bereich von 0,75 und 0,77, liegt.

13. Verfahren nach einem der Ansprüche 8 bis 12, **dadurch gekennzeichnet, dass** in Schritt B) eine getönte oder gefärbte thermoplastische Rahmenfolie (6) aus Alt-Akustik-PVB-Granulat re-extrudiert wird, wobei das eingesetzte Granulat mit einem Farbstoff und/oder mit einem Granulat aus einer getönten oder gefärbten Alt-PVB-Folie versetzt wird.

14. Verfahren nach einem der Ansprüche 8 bis 13, **dadurch gekennzeichnet, dass** die thermoplastische Rahmenfolie (6) in Schritt B) einstückig gefertigt wird und nach Ausbilden einer Aussparung in Schritt C) eingesetzt oder in zwei oder mehr Abschnitten bereitgestellt und als Rahmen um das Funktionselement (2) herum in Schritt C) angeordnet wird.

15. Verfahren nach einem der Ansprüche 8 bis 13, **dadurch gekennzeichnet, dass** in den Schichtstapel vor der Lamination zur Verbundscheibe (1) in Schritt E) zwischen der ersten und/oder der zweiten Scheibe (3, 4) und der thermoplastischen Rahmenfolie (6) mit dem Funktionselement (2) eine erste und/oder zweite Verbindungsfolie (9.1, 9.2) angeordnet wird.
